# EUROPEAN PATENT SPECIFICATION

(11) **EP 0 897 854 B1**
(45) Date of publication and mention of the grant of the patent: **22.01.2003**
(21) Application number: 98306547.5
(22) Date of filing: 18.08.1998
(51) Int. Cl.: B62D 25/18

(54) **A spray reducing device for vehicle wheels**
Das Spritzen mindernde Einrichtung für Fahrzeugräder
Dispositif réduisant les projections pour des roues de véhicules

(30) Priority: 20.08.1997 GB 9717560
(43) Date of publication of application: 24.02.1999
(73) Proprietor: Boydell & Jacks Limited, Burnley, Lancashire BB11 2HW (GB)
(72) Inventor: Jacks, Stephen Andrew, Nelson, Lancashire, BB9 8RF (GB)
(74) Representative: Every, David Aidan

(56) References cited:
- DE-U- 9 108 695
- FR-A- 2 663 596

## Description

The present invention relates to a spray reducing device for vehicle wheels and more particularly, but not exclusively, a mudflap which incorporates such a device for collecting and discharging water which is incident upon it after being sprayed up from a vehicle wheel.

It is well known to fit spray reducing devices to vehicles, particularly heavy goods vehicles, for reducing or suppressing the spray generated by the vehicle wheels in wet conditions. The vehicle wheels pick up water from the wet surface of the road and throw it rearwards against solid surfaces on the vehicle thereby atomising it into a spray that is caught in the turbulent air conditions surrounding the moving vehicle and is dispersed in various directions thereby hazardously obscuring the view of road users.

A first known mudflap of this type comprises two adjacent spaced panels, the first panel, nearest the wheel, being perforated or louvred and the second panel being substantially solid. Water thrown up by the vehicle wheel is incident upon the perforated or louvred panel and a significant portion thereof passes through and enters the space between the first and second panels where it drops under gravity and is discharged back to the environment. A disadvantage of mudflaps of this type is that some of the water passing through the first panel is reflected by the second panel and passes back through the perforations or louvres. Furthermore, such mudflaps are prone to blockage and damage by mud or stones thrown up by the vehicle wheels.

In a second type of spray reducing or suppressing mudflap the wheel-facing surface is provided with a plurality of elongate spikes that project towards the wheel. Alternatively the surface may be provided with a tangled mass of flexible, resilient blade elements of various configurations (one example is those which are used to form synthetic grass). A disadvantage of these type of mudflaps is that dirt or stones thrown up by the wheels can become caught between the spikes or trapped in the tangled mass of blade elements and are not easily removed by a self-cleaning action in use. The mud and stones can significantly increase the weight of the mudflap and put strain on its fixings to the mudguard. Moreover, such mudflaps may often require special fixings for attachment to the mudguards, the fixings being designed not to interfere with the wheel-facing surface configuration of the mudflap. In addition, the projections on said surface can cause some difficulty in assembling the mudflap or attaching it to the mudguard.

A mudflap comprising a spray reducing device according to the preamble of claim 1 is disclosed in German Patent No. DE 9108695U. This document describes a double-walled mudflap in which the inner wall has apertures through which water passes to discharge into a channel between the two walls of the mudguard. A first part of the innermost wall is upright and directs water incident upon it in an upward direction whereupon it is deflected by a transverse portion through the aperture so that the water passes downwards into the water discharging gap.

This arrangement suffers from two disadvantages that may reduce the efficiency with which it can discharge water. Firstly, the apertures may become blocked by stones or mud thrown up by the wheels of the vehicle, thereby reducing the volume of the water which can pass through the water discharging gap. Secondly, the surface of the inner wall against which water is splashed is relatively rough due to the construction of the apertures, with the consequence of increasing the amount of spray produced.

It is an object of the present invention to obviate or mitigate the aforesaid disadvantages.

According to the present invention there is provided a spray reducing device for vehicle wheels, the device comprising first and second walls that are spaced apart so as to define a water discharging gap, the first wall being upright and having a surface that directs water incident upon it in an upward direction, and a guide member disposed adjacent an end of the first wall and spaced therefrom to define a clearance; the guide member positioned transverse to the first wall and shaped so as to intercept upwardly directed water leaving the surface of the first wall and deflect it through the clearance and downwards into the water discharging gap, characterised in that said surface of the first wall is substantially continuous and smooth in an upward direction.

This arrangement provides for a very efficient way of catching splashed water and discharging it without significant turbulence or spray. This is as a result of the fact that it makes use of the momentum of the water splashed from the vehicle wheel and allows it to continue in an upwards direction before it is redirected by the guidance member at which time the water has lost some of its velocity. Providing a first wall with a substantially continuous and smooth surface ensures that as much of the water as possible is directed in the desired direction.

The guide member may be at an end of the second wall and formed integrally therewith or otherwise. It may conveniently have a concave surface that faces said end of the first wall and serves to redirect the water through the clearance and into the water discharging chamber.

The guide member may be in the form of a curved lip.

The surface of the first wall preferably has at least a portion that is inclined to vertical such that, in use, it is directed away from the vehicle wheel in an upwards direction.

The device may conveniently be provided with side walls that extend between the front and rear panels, span the width of the water discharging gap and serve to prevent side spray.

There is preferably provided at least one drain aperture at an end of the water discharging gap that is distal from the guide member.

Specific embodiments of the present invention will now be described, by way of example only, with reference to the accompanying drawings in which:
Figure 1 is a perspective view from the rear of part of a vehicle mudguard fitted with a spray reducing device according to the present invention;
Figure 2 is a view of the embodiment of figure 1 from the rear of the vehicle;
Figure 3 is a view of an alternative embodiment of the present invention from the rear of the vehicle;
Figure 4 is a diagrammatic view of the spray reduction device shown in cross section and fitted adjacent a vehicle wheel; and
Figure 5 is an enlarged view of part of figure 4.

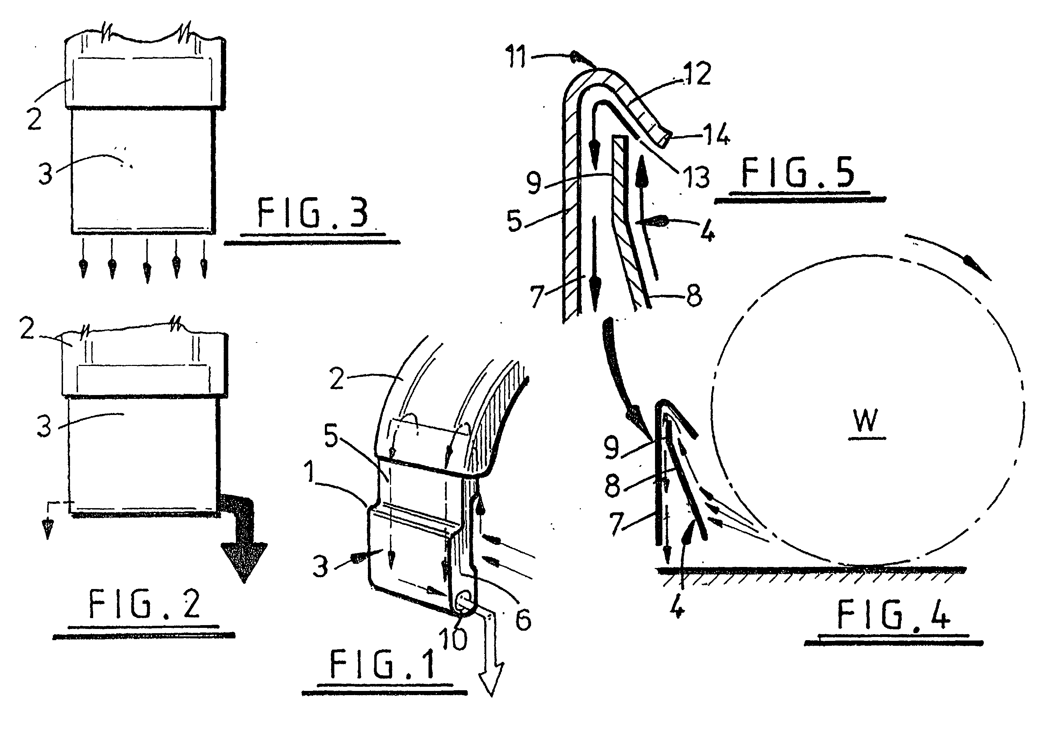

Referring now to the drawings, figure 1 shows a spray reducing device in the form of a mudflap 1 which in use is suspended vertically from a vehicle mudguard 2 or chassis behind a vehicle wheel (not shown in figure 1).

The mudflap 1 comprises a rear panel 3 that is generally channel-shaped in cross section and which houses a front panel 4 (as can be seen from figures 4 and 5). The panels 3,4 are preferably moulded in one or two pieces by a conventional rotational blow moulding process from a synthetic plastics material or rubber such as, for example, polyethylene. However they may be manufactured by injection moulding or any other suitable process.

The rear panel 3 comprises a stepped planar vertical rear wall 5 and opposed upstanding side walls 6 which may be integral with or fixed to the front panel 4 in such a way that the latter is spaced from the rear wall so as to define a vertical chamber 7 therebetween. The front panel 4 comprises a main lower portion 8 that is inclined downwardly and inwardly to the vehicle wheel W (shown in dotted line in figure 4) and an upper portion 9 that is substantially vertical. The bottom edge of the front panel 4 does not extend beyond the free edge of the side walls 6 and meets with a bottom wall 10 of the rear panel 3 that is curved inwardly and upwardly.

An upper portion 11 of the rear panel is in-turned to form a lip 12 that projects downwardly and towards the vehicle wheel W. The lip 12 is bent so as to present a concave surface to the top edge of the front panel 4. The upper portion 9 of the front panel 4 is positioned adjacent but clear of the lip 12 so as to define an aperture 13 along the width of the mudflap between the side walls 6 and so that a free edge 14 of the lip projects beyond it towards the vehicle wheel.

In the embodiment of figures 1 and 2 the lower ends of the side walls 6 have drain holes to permit the egress of water (as indicated by the arrows in figure 2) caught by the spray reduction mudflap. In an alternative embodiment shown in figure 3 drain holes are provided in the bottom of the mudflap so that water may drain in the direction shown by the arrows.

Operation of the spray reducing mudflap in use will now be described with reference to figures 4 and 5. It will be appreciated that the cross section of the mudflap 1 is represented diagrammatically for clarity. In wet road conditions, as the wheel rotates it picks up water from the road and splashes it rearwardly towards the mudflap 1 in the direction indicated by the cluster of three arrows shown in figure 4. Virtually all of this splashed water is incident on the planar surface of the lower portion 8 of the front panel 4 and is encouraged to continue in an upwards direction by virtue of the inclination of the panel 4. The water travels along the length of the surfaces of the upper and lower portions 8, 9 of the front panel 4 until its trajectory is intercepted by the lip 12 whereupon it is redirected. The lip 12 deflects the water around its concave surface and redirects it into the chamber 7 where it falls under gravity to the drain holes 10.

The design has proved to be extremely efficient in tests. This is because in contrast to most of the designs of the prior art the spray reduction device of the present invention makes use of the momentum of the water to redirect it. The device encourages the water to continue on its upward trajectory and only when its velocity has decreased (by virtue of the downward pull of gravity) does it redirect it towards the ground with relatively little turbulence having been caused. As the speed of the vehicle increases the device becomes more efficient since the velocity of the incident water is increased and it travels further and with greater velocity along the front plate 4 and around the lip 12.

The side walls 6 of the rear panel 3 serve to contain any spray that is deflected sideways from the front panel 4 of the mudflap 1.

It will be appreciated that numerous modifications to the above described design may be made without departing from the scope of the invention as defined in the appended claims. For example, the exact inclination of the lower portion of the front panel may be selected according to the application. In the limiting case it has been shown the front panel is still effective if the lower portion is vertical (i.e. it is coplanar with the upper portion) but obviously some amount of inclination is desirable. In fact the lower and upper portions may both be inclined at the same or different angles. The amount of inclination is limited in practice by the thickness of the mudflaps that can be practically accommodated.

In an alternative embodiment (not shown in the drawings) the front panel 4 has a plurality of vertical ribs or walls that assist in guiding the splashed water upwards. In such an embodiment the side walls 6 may be omitted.

In a further alternative embodiment the bottom wall 10 at the rear panel 3 may be omitted to leave the bottom of the mudflap completely open to allow drainage of the collected water.

## Claims

1. A spray reducing device (1) for vehicle wheels (W), the device (1) comprising first (4) and second (3) walls that are spaced apart so as to define a water discharging gap (7), the first wall (4) being upright and having a surface (8,9) that directs water incident upon it in an upward direction, and a guide member (12) disposed adjacent an end of the first wall (4) and spaced therefrom to define a clearance (13); the guide member (12) positioned transverse to the first wall (4) and shaped so as to intercept upwardly directed water leaving the surface (8,9) of the first wall (4) and deflect it through the clearance (13) and downwards into the water discharging gap (7), **characterised in that** said surface (8,9) of the first wall (4) is substantially continuous and smooth in an upward direction.

2. A spray reducing device (1) according to claim 1, wherein the surface (8,9) at the first wall (4) has vertical ribs or walls that assist in guiding the water upwards.

3. A spray reducing device (1) according to claim 1 or 2, wherein the guide member (12) is at an end of the second wall (3).

4. A spray reducing device (1) according to claim 3, wherein the guide member (12) has a concave surface that faces said end of the first wall (4).

5. A spray reducing device (1) according to anyone of claims 1 to 4, wherein the guide member (12) is in the form of a curved lip.

6. A spray reducing device (1) according to any preceding claim, wherein the surface (8,9) of the first wall (4) has at least a portion (8) that is inclined to vertical such that, in use, it is directed away from the vehicle wheel (W) in an upwards direction.

7. A spray reducing device (1) according to any preceding claim, wherein there are provided side walls (6) that extend between the front (4) and rear (3) panels and span the depth of the water discharging gap (7).

8. A spray reducing device (1) according to any preceding claim, wherein there is provided at least one drain aperture at an end of the water discharging gap (7) that is distal from the guide member (12).

9. A mudguard for a vehicle fitted with a spray reducing device (1) according to any one of the preceding claims.

## Patentansprüche

1. Spritzverminderungsvorrichtung (1) für Fahrzeugräder (W), wobei die Vorrichtung (1) folgendes umfaßt: eine erste (4) und eine zweite Wand (3), die mit Zwischenraum zueinander angeordnet sind, um einen Wasserableitungsspalt (7) zu definieren, wobei die erste Wand (4) aufrecht steht und eine Fläche (8, 9) hat, die auf dieselbe auftreffendes Wasser in einer Richtung nach oben leitet, und ein Führungselement (12), das angrenzend an ein Ende der ersten Wand (4) und mit Zwischenraum zu demselben angeordnet ist, um einen Freiraum (13) zu definieren, wobei sich das Führungselement (12) quer zur ersten Wand (4) befindet und so geformt ist, daß es das nach oben geleitete Wasser, das die Fläche (8, 9) der ersten Wand (4) verläßt, abfängt und durch den Freiraum (13) und nach unten in den Wasserableitungsspalt (7) ablenkt, **dadurch gekennzeichnet, daß** die Fläche (8, 9) der ersten Wand (4) wesentlich durchgehend und glatt in einer Richtung nach oben verläuft.

2. Spritzverminderungsvorrichtung (1) nach Anspruch 1, bei der die Fläche (8, 9) an der ersten Wand (4) vertikale Rippen oder Wände hat, die das Aufwärtsleiten des Wassers unterstützen.

3. Spritzverminderungsvorrichtung (1) nach Anspruch 1 oder 2, bei der sich das Führungselement (12) an einem Ende der zweiten Wand (3) befindet.

4. Spritzverminderungsvorrichtung (1) nach Anspruch 3, bei der das Führungselement (12) eine konkave Oberfläche hat, die zum Ende der ersten Wand (4) zeigt.

5. Spritzverminderungsvorrichtung (1) nach einem der Ansprüche 1 bis 4, bei der das Führungselement (12) die Form einer gewölbten Lippe hat.

6. Spritzverminderungsvorrichtung (1) nach einem der vorhergehenden Ansprüche, bei der die Fläche (8, 9) der ersten Wand (4) wenigstens einen Abschnitt (8) hat, der zur Vertikalen geneigt ist derart, daß er bei Benutzung in einer Richtung nach oben vom Fahrzeugrad (W) weg gerichtet ist.

7. Spritzverminderungsvorrichtung (1) nach einem der vorhergehenden Ansprüche, bei der Seitenwände (6) bereitgestellt werden, die zwischen der vorderen (4) und der hinteren Blende (3) verlaufen und die Tiefe des Wasserableitungsspalts (7) überspannen.

8. Spritzverminderungsvorrichtung (1) nach einem der vorhergehenden Ansprüche, bei der wenigstens eine Abflußöffnung an einem Ende des Wasserableitungsspalts (7) bereitgestellt wird, das sich distal vom Führungselement (12) befindet.

9. Kotflügel für ein Fahrzeug, der mit einer Spritzverminderungsvorriehtung (1) nach einem der vorhergehenden Ansprüche versehen ist.

## Revendications

1. Dispositif de réduction des projections (1) de roués d'un véhicule (W), le dispositif (1) comprenant: des première (4) et deuxième (3) parois espacées, de sorte à définir un espace de déchargement d'eau (7), la première paroi (4) étant verticale et comportant une surface (8, 9) dirigeant l'eau la heurtant dans une direction allant vers le haut, et un élément de guidage (12) agencé près d'une extrémité de la première paroi (4) et espacé de celle-ci pour définir un dégagement (13) ; l'élément de guidage (12) étant positionné de manière transversale par rapport à la première paroi (4) et formé de sorte à intercepter l'eau dirigée vers le haut quittant la surface (8, 9) de la première paroi (4) et à la dévier à travers le dégagement (13) et vers le bas dans l'espace de déchargement de l'eau (7), **caractérisé en ce que** ladite surface (8, 9) de la première paroi (4) est pratiquement continue et lisse dans une direction allant vers le haut.

2. Dispositif de réduction des projections (1) selon la revendication 1, dans lequel la surface (8, 9) au niveau de la première paroi (4) comporte des nervures ou des parois verticales facilitant le guidage de l'eau vers le haut.

3. Dispositif de réduction des projections (1) selon les revendications 1 ou 2, dans lequel l'élément de guidage (12) est agencé au niveau d'une extrémité de la deuxième paroi (3).

4. Dispositif de réduction des projections (1) selon la revendication 3, dans lequel l'élément de guidage (12) comporte une surface concave faisant face à ladite extrémité de la première paroi (4).

5. Dispositif de réduction des projections (1) selon l'une quelconque des revendications 1 à 4, dans lequel l'élément de guidage (12) a la forme d'un rebord courbé.

6. Dispositif de réduction des projections (1) selon l'une quelconque des revendications précédentes, dans lequel la surface (8, 9) de la première paroi (4) comporte au moins une partie (8) inclinée par rapport à la verticale, de sorte à être orientée en service à l'écart de la roue du véhicule (W) dans une direction allant vers la haut.

7. Dispositif de réduction des projections (1) selon l'une quelconque des revendications précédentes, comportant des parois latérales (6) s'étendant entre les panneaux avant (4) et arrière (3) et enjambant la profondeur de l'espace de déchargement de l'eau (7).

8. Dispositif de réduction des projections (1) selon l'une quelconque des revendications précédentes, comportant au moins une ouverture de drainage au niveau d'une extrémité de l'espace de déchargement de l'eau (7) distale par rapport à l'élément de guidage (12).

9. Garde-boue pour un véhicule comportant un dispositif de réduction des projections (1) selon l'une quelconque des revendications précédentes.
